# EUROPÄISCHE PATENTSCHRIFT

(11) **EP 1 713 637 B1**
(45) Veröffentlichungstag und Bekanntmachung des Hinweises auf die Patenterteilung: **06.04.2011**
(21) Anmeldenummer: 05714942.9
(22) Anmeldetag: 07.02.2005
(51) Int. Cl.: B32B 5/00

(54) **HOCHELASTISCHES BESPANNUNGSMATERIAL AUF BASIS EINES KASCHIERTEN GESCHÄUMTEN ELASTOMEREN**
HIGHLY ELASTIC COVERING MATERIAL BASED ON A COATED FOAMED ELASTOMER
MATIERE D'ENTOILAGE DE GRANDE ELASTICITE A BASE D'UN ELASTOMERE EXPANSE CONTRECOLLE

(30) Priorität: 06.02.2004 DE 102004005842
(43) Veröffentlichungstag der Anmeldung: 25.10.2006
(73) Patentinhaber: GM Global Technology Operations, Inc., Detroit, MI 48265-3000 (US)
(72) Erfinder: BACCELLI, Gian-Luca, 65232 Taunusstein-Orlen (DE); FRIES, Armin-Lutz, 64293 Darmstadt (DE); LEOPOLD, Frank, 65232 Taunusstein-Orlen (DE); LUNGERSHAUSEN, Dirk, Rainer, 65207 Wiesbaden (DE)
(74) Vertreter: Strauss, Peter
(86) Internationale Anmeldenummer: PCT/DE2005/000191
(87) Internationale Veröffentlichungsnummer: WO 2005/075187

(56) Entgegenhaltungen:
- US-A- 4 197 342

## Beschreibung

Die Erfindung betrifft ein hochelastisches Bespannungsmaterial auf Basis eines kaschierten, geschäumten Elastomeren, insbesondere als äußere einen aufblasbaren Sitz kontaktierende, dehnbare Oberfläche nach dem Oberbegriff des Anspruchs 1, sowie deren Verwendung.

Geschäumte Elastomere haben den Nachteil, dass daraus gebildete Materiallagen eine schlechte Rissfortpflanzung aufweisen, beispielsweise wenn solche Materiallagen mittels einer Schraubverbindung an einem Träger befestigt sind. Um eine gute Dehnbarkeit solcher Materiallagen zu gewährleisten und gleichzeitig eine Rissfortpflanzung zu verhindern wurden zahlreiche Anstrengungen unternommen.

Geschäumte Elastomere haben weiterhin den Nachteil, dass Harze, wie Epoxidharze oder Duroplaste auf geschäumten Elastomeren schlecht haften und bei Dehnbelastungen des geschäumten Elastomeren leicht brüchig sind.

Die den nächstliegenden Stand der Technik bildende US-A- 4 197 342 offenbart ein hochelastisches Bespannungsmaterial enthaltend einen Kern aus geschäumten Elastomeren sowie obere und untere äußere Oberflächen aus einer dehnbare Textillage und einen Rahmen als unelastisches Verstärkungsmaterial.

Aufgabe der vorliegenden Erfindung ist es die vorgenannten Nachteile im Stand der Technik zu überwinden, ein hochelastisches Material zur Verfügung zu stellen, dass eine deutlich verringerte Rissfortpflanzung bei gleichzeitig guter Montierbarkeit aufweist, abriebfest ist und eine sehr weiche Anmutung hat.

Es wurde nunmehr überraschend festgestellt, dass die vorstehende Aufgabe erfindungsgemäß durch ein hochelastisches Bespannungsmaterial mit den Merkmalen des Anspruchs 1 lösbar ist.

Ein solches erfindungsgemäßes, hochelastisches Bespannungsmaterial ist beispielsweise als äußere, einen aufblasbaren Sitz kontaktierende Oberfläche geeignet, da es nicht nur hoch fest und belastbar ist, sondern auch mehrdimensional, d.h. in X-, Y- und Z-Richtung streckbar bzw. dehnbar ist.

Außerdem weist das erfindungsgemäße, hochelastische Bespannungsmaterial eine hohe Abriebfestigkeit und eine sehr weiche Anmutung auf.

Das erfindungsgemäße, hochelastische Bespannungsmaterial weist wenigstens eine hochelastische Materiallage aus einem geschäumten Elastomeren auf, dass sandwichartig von wenigstens einer oberen und wenigstens einer unteren dehnbaren Textillage kaschiert ist.

Der Begriff "dehnbare Textillage" umfasst alle denkbaren textilen Träger die elastisch sind und/oder wenigstens entlang einer X-, Y-, und/oder Z-Achse streckbar sind. Beispielsweise kann man durch den Fachmann bekannte Webtechniken eine mechanische Streckbarkeit von ansonsten nicht dehnbaren Fasern erreichen.

Bevorzugt ist, dass die dehnbare Textillage mit dem geschäumten Elastomeren wenigstens teilweise, vorzugsweise vollständig unlösbar verbunden ist.

Eine ortsfeste Verbindung der Textillage/n mit dem geschäumten Elastomeren kann man beispielsweise durch direktes aufschäumen oder aufbringen des noch nicht verfestigten Elastomeren auf das Textil/en erreichen. Erfindungsgemäß sind aber alle Verfahren die dem Fachmann bekannt sind geeignet, mittels derer man ein Textil/ien auf einen geschäumten Elastomeren aufbringen kann.

Das Verstärkungsmaterial kann man, beispielsweise anschlieβend, auf der äußeren Oberfläche wenigstens einer Textillage aufbringen.

Vorteilhaft ist, dass das Verstärkungsmaterial auf der Textillage bei einer Dauerzugbeanspruchung, wesentlich besser haftet, als wenn man es direkt auf dem geschäumten Elastomeren aufbringt.

Um eine dauerhafte Bindung des Textils bzw. Textillage/n mit dem Verstärkungsmaterial/ien zu erreichen ist es bevorzugt, das Verstärkungsmaterial mit der Textillage/n chemisch und/oder physikalisch zu verbinden, Eine besonders feste Verbindung lässt sich erreichen, wenn man eine sogenannte Verzahnung bzw. Verankerung im Sinne einer physikalischen Heißschmelzklebstoffverbindung ausbildet.

Besonders geeignet sind deshalb insbesondere Textilien, die eine äußere strukturierte Oberfläche aufweisen, wobei die strukturierte Oberfläche vorzugsweise eine Webstruktur, Netzstruktur und/oder Porenstruktur aufweist, um so eine gute chemische und/oder physikalische Verbindung zu erreichen.

Mittels der flächigen Aufbringung des Verstärkungsmaterials kann man in diesen Bereichen ein das hochelastische Bespannungsmaterial durchgehendes Loch/Löcher ausbilden, beispielsweise geeignet für eine Schraubverbindung, ohne dass es in diesem Bereich zu einer Rissbildung bei elastischer bzw. Dehnbeanspruchung des erfindungsgemäßen hochelastischen Bespannungsmaterials kommt.

In einer bevorzugten Ausführungsform bringt man das Verstärkungsmaterial im Randbereich, bevorzugt umlaufend, besonders bevorzugt in Form eines Rahmens auf.

Das Verstärkungsmaterial bringt man bevorzugt in mehreren übereinander angeordneten Laminatschichten auf, wobei vorzugsweise wenigstens eine, bevorzugt mehrere Laminatschichten zusätzlich mit einem Faser-Material verstärkt sind. Das Faser-Material kann bevorzugt ausgewählt sein aus der Gruppe umfassend Glasfaser, Kohlefaser, Polymerfaser, Armide und/oder Keramikfaser.

Um eine gute Stabilität des Rahmens zu erreichen, kann man 2 bis 20 Schichten, vorzugsweise 3 bis 10 Schichten und bevorzugt 4 bis 6 Schichten des Verstärkungsmaterials und/oder faserverstärktes Verstärkungsmaterial flächig oder in Form eines Rahmens auf den textilkaschierten Elastomeren aufbringen.

Das Verstärkungsmaterial bzw. faserverstärktes Verstärkungsmaterial bringt man vorzugsweise an den Stellen auf dem textilkaschierten Elastomeren auf, wo man eine Rissfortpflanzung, beispielsweise begünstigt durch Ausbildung eines Lochs/Löcher, vermeiden will.

Die Ausbildung eines Rahmens mittels des Verstärkungsmaterials im Randbereich des hochelastischen Bespannungsmaterials hat den Vorteil, dass man so den Rahmen selbständig freitragend ausbilden kann, was dem in dem Rahmen angeordneten hochelastischen Bespannungsmaterial eine Formstabilität, beispielsweise Faltenfreiheit bei nicht elastischer oder Dehnbeanspruchung verleiht.

Ein weiterer Vorteil besteht darin, dass man den Rahmen mit Löchern versehen kann, was eine gute Montierbarkeit des hochelastischen Bespannungsmaterials ohne die Gefahr einer Rissfortpflanzung erlaubt.

Es ist aber auch zusätzlich oder alternativ möglich den Rahmen mittels wenigstens einer Haltevorrichtung, wie Klemmvorrichtung, Spannvorrichtung oder dergleichen mit einem anderen Bauteil zu verbinden bzw. in einem Kraftfahrzeug mit einem anderen Bauteil zu montieren.

Beispielsweise kann man den Rahmen, wenn dieser ausreichend flexibel ausgestaltet ist auch mittels einer Haltevorrichtung spannen, um so gegebenenfalls Falten des hochelastischen Bespannungsmaterials zu glätten oder zu reduzieren.

Eine erfindungsgemäß verwendbare Textillage weist in X und/oder Y Richtung, vorzugsweise multiachsial, eine Dehnbarkeit von wenigstens ≥ 50% und 700%, vorzugsweise von ≥ 100% und ≤ 500% und bevorzugt von ≥ 150% und ≤ 250% auf.

Die Dehnbarkeit wird ermittelt, indem man das Textil flächig auf einer Metallplatte im nicht gedehnten Zustand ausbreitet und dann langsam über einen Zeitraum von 5 min. bis zur maximalen Streckbarkeit in X oder Y Richtung dehnt.

Eine erfindungsgemäße verwendbare Textillage umfasst ein Gewebe, vorzugsweise ein elastisches Gewebe, bevorzugt ein dehnbar gewebtes Gewebe, und besonders bevorzugt auf Basis einer Kunstfaser, wobei die Kunstfaser am meisten bevorzugt auf Polyamid, wie Nylon, basiert.

Ein erfindungsgemäß verwendbares geschäumtes Elastomer basiert auf wenigstens einem Material, ausgewählt aus der Gruppe umfassend natürliche und/oder synthetische Elastomere, vorzugsweise Latexschaum, Kautschuk, Chloropren-Kautschuk, Polychloropren, Blockpolymere und/oder Propfpolymere, wobei Neopren® am meisten bevorzugt ist.

Ein erfindungsgemäß verwendbares Verstärkungsmaterial kann ausgewählt sein aus der Gruppe umfassend Harze und/oder Duroplaste. Das Harz basiert vorzugsweise auf Epoxidvinylester und/oder Epoxidpolyester und der Duroplast basiert vorzugsweise auf einem Melaminharz, Phenolharz und/oder Polyurethanharz.

Das erfindungsgemäße hochelastische Bespannungsmaterial weist beispielsweise für:
- die hochelastische Materiallage eine Schichtdicke von ≥ 0,1 mm und ≤10 mm, vorzugsweise von ≥ 0,5 mm und ≤ 5 mm und bevorzugt von ≥ 1,0 mm und ≤ 2,5 mm; und/oder
- die Textillage eine Schichtdicke von ≥ 0,05 mm und ≤ 1 mm, vorzugsweise von ≥ 0,07 mm und ≤ 0,5 mm und bevorzugt von ≥ 0,1 mm und ≤ 0,2 mm; und/oder
- die Verstärkungsschicht eine Schichtdicke von ≥ 3 mm und ≤ 25 mm, vorzugsweise von ≥ 5 mm und ≤ 20 mm und bevorzugt von ≥ 8 mm und ≤ 15 mm; auf.

Das erfindungsgemäße, hochelastische Bespannungsmaterial kann eine Oberfläche von 1 cm² bis 1000 m², vorzugsweise 5 cm² bis 100 m², bevorzugt von 10 cm² bis 10 m², und besonders bevorzugt von 20 cm² bis 2 m² aufweisen.

Der Rahmen aus Verstärkungsmaterial kann eine Breite von ≥ 2 mm und ≤ 100 mm, vorzugsweise von ≥ 5 mm und ≤ 50 mm und bevorzugt von ≥ 15 mm und ≤ 25 mm aufweisen.

Bevorzugt weist das hochelastische Bespannungsmaterial umfassend hochelastische Materiallage/n und Textillage/n eine Schichtdicke von ≥ 0,15 mm und ≤ 10,4 mm, vorzugsweise von ≥ 0,6 mm und ≤ 5,5 mm und bevorzugt von ≥ 1,2 mm und ≤ 3 mm auf.

Wie bereits vorstehend ausgeführt, weist die Schicht aus Verstärkungsmaterial/ien, Textillage/n und hochelastische Materiallage/n wenigstens ein durchgehendes Loch, vorzugsweise mehrere Löcher, zwecks Befestigung des erfindungsgemäßen, verstärkten, hochelastischen Bespannungsmaterial in einem Kraftfahrzeug, auf.

Das mit einem Verstärkungsmaterial verstärkte hochelastische Bespannungsmaterial kann beispielsweise mit einem aufblasbaren Formkörper in Kontakt steht.

In einer bevorzugten Ausführungsform macht das mittels Verstärkungsmaterial verstärkte hochelastische Bespannungsmaterial wenigstens eine äußere Oberfläche des aufgeblasenen Formkörper aus, um so die Ausdehnbewegung des aufblasbaren Körpers zumindest teilweise formschlüssig mitzumachen.

Der aufblasbare Formkörper kann beispielsweise die Form eines Sitzes oder einer Sitzbank im aufgeblasen Zustand aufweisen.

Das erfindungsgemäße mit Verstärkungsmaterial verstärkte hochelastische Bespannungsmaterial kann insbesondere in einem Luft-, Land- und/oder Wasser-Fortbewegungsmittel, vorzugsweise in einem Kraftfahrzeug, Flugzeug und/oder Schiff zwecks Ausbildung einer dehnbaren Oberfläche für einen aufblasbaren Formkörper, vorzugsweise eine Sitzvorrichtung, erfindungsgemäß verwendet werden.

In einer bevorzugten Ausführungsform ist das mit einem Rahmen aus Verstärkungsmaterial versehene hochelastische Bespannungsmaterial in einem Kraftfahrzeug angeordnet, wobei der aufblasbare Formkörper in Kontakt mit dem hochelastischen Bespannungsmaterial steht, wobei der aufblasbare Formkörper beim Aufblasen gegen das hochelastische Bespannungsmaterial drückt, wobei das hochelastische Bespannungsmaterial an den Kontaktstellen sich mit dem Formkörper formschlüssig ausdehnt und so eine sitzartige Oberflächenform annimmt.

Vorteilhaft ist es, dass das hochelastische Bespannungsmaterial eine faltenfreie äußere Oberfläche aufweisen kann, so dass mögliche Falten des aufgeblasenen Formkörpers überdeckt werden, was die Anmutung des Sitzes wesentlich verbessert.

Das hochelastische Bespannungsmaterial legt sich praktisch wie ein Film über den kontaktierenden Bereich des Formkörpers, sozusagen wie eine zweite Haut.

Im nicht aktiven Zustand, d.h. wenn der Formkörper nicht aufgeblasen ist, entspannt sich das hochelastische Bespannungsmaterial und bildet ein glatte ebene Oberfläche aus.

Um eine ebene glatte Oberfläche des hochelastischen Bespannungsmaterials auszubilden kann es vorteilhaft sein, wenn man das hochelastische Bespannungsmaterial unter leichter Zugspannung hält, während man beispielsweise den umlaufenden Rahmen aus Verstärkungsmaterial ausbildet.

Außerdem kann man das hochelastische Bespannungsmaterial mittels aufblasbaren Formkörper auf die gewünschte Ausdehnungsform vorspannen, und anschließend im entspannten Zustand das Verstärkungsmaterial aufbringen.

Gemäß einer weiteren bevorzugten Ausführungsform der Erfindung kann mam doppelt kaschiertes Neopren als Elastomer verwenden. Bei dieser Art von Neopren handelt es sich im Wesentlichen um Latexschaum, welcher mit Nylon kaschiert wurde. Das Nylon bildet dabei eine feinstrukturierte Oberfläche. Es hat sich gezeigt, dass diese feinstrukturierte Oberfläche eine sehr gute innige Verbindung mit einem Epoxydharzkleber bzw. Duroplast eingehen kann. Dabei bildet sich voraussichtlich zwischen dem kaschierten Neopren und der aufgetragenen Duroplastschicht eine physikalische und chemische Vernetzungsstruktur.

Sinn und Zweck dieser Verbindung zwischen dem doppelt kaschierten Neopren und einem Duroplast ist es beispielsweise, Stellen auf dem Neopren zu schaffen, die insbesondere ein mechanisches Bearbeiten des Neoprens ermöglichen, um auf diese Weise in das Neopren geeignete Durchgangsöffnungen einbringen zu können. Ferner können derartige punktuelle Verstärkungen dazu dienen, dem Neopren eine gewünschte designerische Struktur aufzuprägen.

Ein Beispiel für eine solche Materialverstärkung ist ein Duroplastrahmen, um eine doppelt kaschierte Neoprenfläche herum, mittels der eine flächige Befestigung des Neoprens möglich ist, ohne dass beim Strecken des Neoprens die Flächenränder ungleichmäßig verzogen werden.

Zur Komplettierung der Verstärkungsstruktur ist es in der Regel notwendig, nach dem Aufbringen der lokalen Duroplaststellen zur weiteren Befestigung noch weitere geeignete Laminatschichten auf bzw. in die Duroplastschicht einzubringen um einen frei geformten Rahmen erstellen zu können. Diese Laminatschichten können glasfaserverstärkte Kunststoffe, Kohlefaser, Armide und/oder Keramikfaser beinhalten.

Ein weiterer Vorteil ist, dass der Querschnitt der mittels Verstärungsmaterial gebildeten Verstärkungsstellen bereits dem entspricht, wie er nach der Verarbeitung bzw. dem Einbau der Elastomerschicht, wie Neoprenschicht, ist, so dass das so verstärkte Elastomer problemlos mit einer Klemmhalterung befestigt werden kann, ohne dass es zu einem Herausrutschen durch eine Querschnittsverjüngung durch ein Verspannen des Elastomers beim Einbau kommt.

Wie bereits erwähnt, werden die Verstärkungsstellen auch dann im verspannten Zustand auf Elastomer, wie Neopren, aufgebracht, wenn das doppelt kaschierte Elastomer strukturell an Volumina, Ecken und/oder Kanten angepasst werden soll.

In einem weiteren Verfahrensschritt umfassend das Einbringen von Durchgangsöffnungen in die verstärkten Bereiche können dann die Löcher eingebracht werden, mit denen das Neopren, z B. durch Verschrauben, befestigt werden kann.

Ein Verfahren zur Herstellung des erfindungsgemäßen Bespannungsmaterials wird nachstehend angegeben:
a) Bereitstellen der doppelt kaschierten Neoprenschicht,
b) Aufbringen einer Duroplastschicht auf die Neoprenschicht auf solchen Stellen oder Bereiche, die verstärkt werden sollen,
c) Aufbringen geeigneter Laminatschichten auf die Verstärkungsstellen oder Bereiche.
   Ergänzend sind noch folgende Verfahrensschritte möglich:
d) Vorspannen der Neoprenschicht,
e) Aufbringen des Duroplasts auf die vorgespannte Neoprenschicht.

Der Gegenstand der vorliegenden Erfindung wird anhand der nachstehenden Figuren 1 bis 6 noch weiter erläutert.
- Fig.1: erfindungsgemäßes Bespannungsmaterial ohne Verstärkungsmateriallage im Querschnitt;
- Fig.2: erfindungsgemäßes Bespannungsmaterial mit Ver- stärkungsmateriallage im Querschnitt;
- Fig.3: erfindungsgemäßes Bespannungsmaterial mit obe- rer und unterer äußerer Verstärkungsmaterial- lage im Querschnitt;
- Fig.4: erfindungsgemäßes Bespannungsmaterial mit obe- rer und unterer äußerer Verstärkungsmaterial- lage im Querschnitt, wobei die Verstärkungsma- teriallage in einer Klemmvorrichtung einge- spannt ist;
- Fig.5: wie Fig.4 in Draufsicht von oben im Schnitt;
- Fig.6: erfindungsgemäßes Bespannungsmaterial mit obe- rer und unterer äußerer Verstärkungsmaterial- lage im Querschnitt, wobei die Verstärkungsma- teriallage Bohrlöcher zur schraubbaren Befes- tigung aufeist.

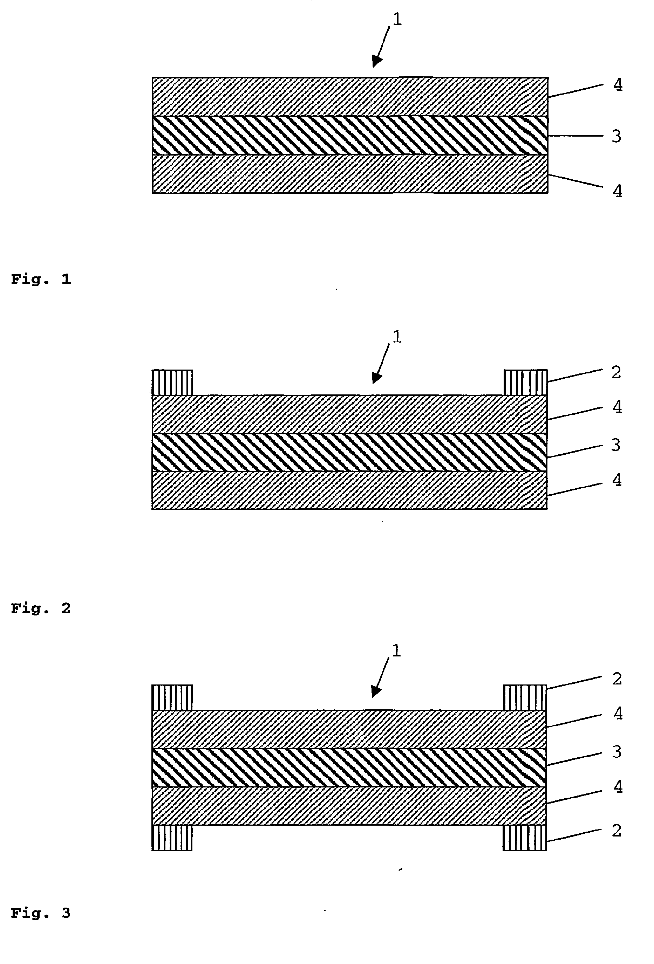

Die Figur 1 zeigt im Querschnitt ein erfindungsgemäßes Bespannungsmaterial (1) ohne Verstärkungsmateriallage (2), wobei die innere Schicht (3) aus einem geschäumten Elastomeren besteht, die sandwichartig zwischen wenigstens einer oberen und wenigstens einer unteren dehnbare Textillage (4) kaschiert ist.

Die Figur 2 zeigt im Querschnitt ein erfindungsgemäßes Bespannungsmaterial (1) mit Verstärkungsmateriallagen (2) im Randbereich der äußeren oberen Oberfläche des Bespannungsmaterials (1), wobei die innere Schicht (3) aus einem geschäumten Elastomeren besteht, die sandwichartig zwischen wenigstens einer oberen und wenigstens einer unteren dehnbare Textillage (4) kaschiert ist, und wobei die Verstärkungsmateriallage (2) auf einem unelastischen Verstärkungsmaterial basiert.

Die Figur 3 zeigt im Querschnitt ein erfindungsgemäßes Bespannungsmaterial (1) mit Verstärkungsmateriallage (2) im Randbereich der äußeren oberen und unteren Oberfläche des Bespannungsmaterials (1), wobei die innere Schicht (3) aus einem geschäumten Elastomeren besteht, die sandwichartig zwischen wenigstens einer oberen und wenigstens einer unteren dehnbare Textillage (4) kaschiert ist, und wobei die Verstärkungsmateriallage (2) auf einem unelastischen Verstärkungsmaterial basiert.

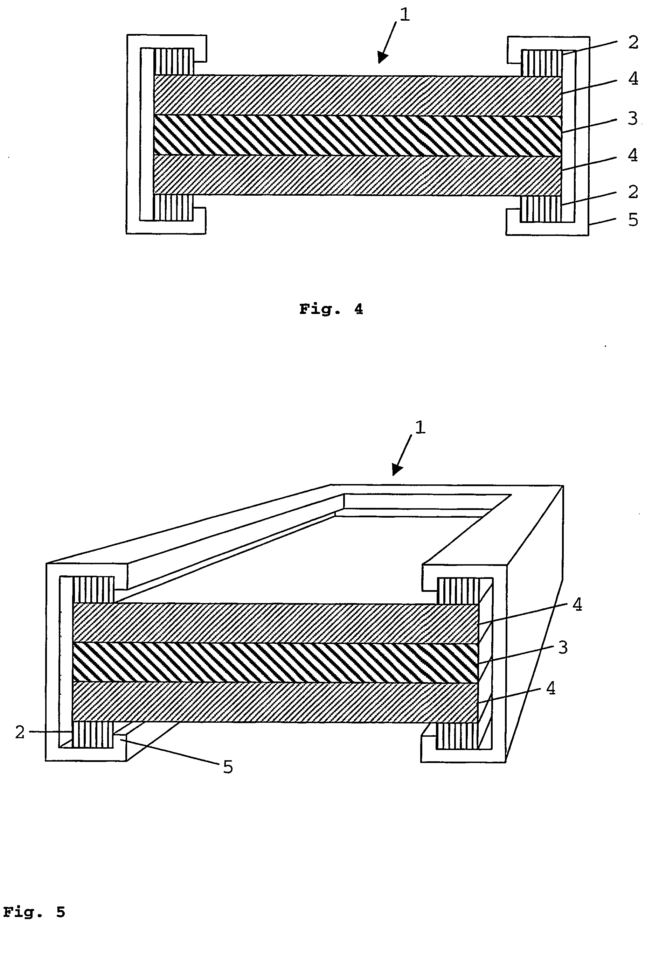

Die Figuren 4 und 5 zeigen ein erfindungsgemäßes Bespannungsmaterial (1) wie in Fig. 3 beschrieben, wobei die äußeren oberen und unteren Verstärkungsmateriallagen (2) die Form eines Rahmens aufweisen und mittels einer Spannvorrichtung (5), die den Rahmen (2) hintergreift, ortsfest eingespannt sind.

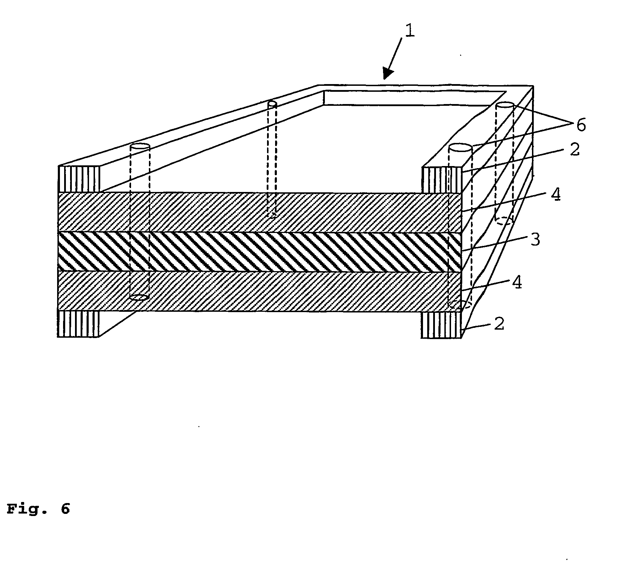

Die Figur 6 zeigt ein erfindungsgemäßes Bespannungsmaterial (1) wie in Fig. 3 beschrieben, wobei die äußeren oberen und unteren Verstärkungsmateriallagen (2) die Form eines Rahmens mit Lochbohrungen (6) aufweisen, die durch das Bespannungsmaterial hindurchgehen. Mittels Schraubverbindungen, nicht gezeigt, kann der Rahmen (2) des erfindungsgemäßen Bespannungsmaterials (1) ortsfest, beispielsweise mit einem Kraftfahrzeugteil bzw. Karosserieteil, verbunden werden.

## Patentansprüche

1. Hochelastisches Bespannungsmaterial auf Basis eines kaschierten geschäumten Elastomeren, insbesondere als äußere einen aufblasbaren Sitz kontaktierende Oberfläche, wobei das hochelastische Bespannungsmaterial aufweist:
- wenigstens eine hochelastische Materiallage aus einem geschäumten Elastomeren,
- wenigstens eine, mindestens eine obere und/oder untere äußere Oberfläche der hochelastischen Materiallage kaschierende dehnbare Textillage,
wobei wenigstens eine äußere Oberfläche der textilkaschierten hochelastischen Materiallage wenigstens teilweise mit einem unelastischen Verstärkungsmaterial beschichtet ist,
**dadurch gekennzeichnet, dass**
das Verstärkungsmaterial ausgewählt ist aus der Gruppe umfassend Harze und/oder Duroplaste.

2. Hochelastisches Bespannungsmaterial nach Anspruch 1, **dadurch gekennzeichnet, dass** wenigstens eine hochelastische Materiallage aus einem geschäumten Elastomeren sandwichartig von wenigstens einer oberen und wenigstens einer unteren dehnbaren Textillage kaschiert ist.

3. Hochelastisches Bespannungsmaterial nach einem der Ansprüche 1 oder 2, **dadurch gekennzeichnet, dass** das Verstärkungsmaterial auf der äußeren Oberfläche wenigstens einer Textillage, vorzugsweise im Randbereich, bevorzugt umlaufend, besonders bevorzugt in Form eines Rahmens aufgebracht ist.

4. Hochelastisches Bespannungsmaterial nach einem der Ansprüche 1 bis 3, **dadurch gekennzeichnet, dass** die Textillage in X und/oder Y Richtung, vorzugsweise multiachsial, um wenigstens ≥ 50 % und ≤ 700 %, vorzugsweise um ≥ 100 % und ≤ 500 % und bevorzugt um ≥ 150 % und ≤ 250 % dehnbar ist.

5. Hochelastisches Bespannungsmaterial nach einem der Ansprüche 1 bis 4, **dadurch gekennzeichnet, dass** die Textillage eine äußere strukturierte Oberfläche aufweist, wobei die strukturierte Oberfläche vorzugsweise eine Webstruktur, Netzstruktur und/oder Porenstruktur aufweist.

6. Hochelastisches Bespannungsmaterial nach einem der Ansprüche 1 bis 5, **dadurch gekennzeichnet, dass** die Textillage ein Gewebe ist, vorzugsweise ein elastisches Gewebe, bevorzugt ein dehnbar gewebtes Gewebe, besonders bevorzugt auf Basis einer Kunstfaser, wobei die Kunstfaser am meisten bevorzugt auf Polyamid basiert.

7. Hochelastisches Bespannungsmaterial nach einem der Ansprüche 1 bis 6, **dadurch gekennzeichnet, dass** das geschäumte Elastomer auf wenigstens einem Material basiert, ausgewählt aus der Gruppe umfassend natürliche und/oder synthetische Elastomere, vorzugsweise Latexschaum, Kautschuk, Chloropren-Kautschuk, Polychloropren, Blockpolymere und/oder Propfpolymere.

8. Hochelastisches Bespannungsmaterial nach einem der Ansprüche 1 bis 7, **dadurch gekennzeichnet, dass** das Verstärkungsmaterial ausgewählt ist aus der Gruppe umfassend Harze und/oder Duroplaste, wobei das Harz auf Epoxidvinylester und/oder Epoxidpolyester basiert und der Duroplast auf einem Melaminharz, Phenolharz und/oder Polyurethanharz basiert.

9. Hochelastisches Bespannungsmaterial nach einem der Ansprüche 1 bis B, **dadurch gekennzeichnet, dass** das Verstarkungsmaterial mit der Textillage chemisch und/oder physikalisch verbunden ist.

10. Hochelastisches Bespannungsmaterial nach einem der Ansprüche 1 bis 9, **dadurch gekennzeichnet, dass** das Verstärkungsmaterial in mehreren übereinander angeordneten Laminatschichten aufgebracht ist, wobei vorzugsweise wenigstens eine, bevorzugt mehrere Laminatschichten zusätzlich mit einem Faser-Material verstärkt sind, bevorzugt ausgewählt aus der Gruppe Glasfaser, Kohlefaser, Polymerfaser, Armide und/oder Keramikfaser.

11. Hochelastisches Bespannungsmaterial nach einem der Ansprüche 1 bis 10, **dadurch gekennzeichnet, dass** der aus dem Verstärkungsmaterial erzeugte Rahmen formstabil und frei tragend ist.

12. Hochelastisches Bespannungsmaterial nach einem der Ansprüche 1 bis 11, **dadurch gekennzeichnet, dass**
- die hochelastische Materiallage eine Schichtdicke von ≥ 0,1 mm und ≤ 10 mm, vorzugsweise von ≥ 0,5 mm und ≤ 5 mm und bevorzugt von ≥ 1,0 mm und ≤ 2,5 mm; und/oder
- die Textillage eine Schichtdicke von ≥ 0,05 mm und ≤ 1 mm, vorzugsweise von ≥ 0,07 mm und ≤ 0,5 mm und bevorzugt von ≥ 0,1 mm und ≤ 0,2 mm; und/oder
- die Verstärkungsschicht eine Schichtdicke von ≥ 3 mm und ≤ 25 mm, vorzugsweise von ≥ 5 mm und ≤ 20 mm und bevorzugt von ≥ 8 mm und ≤ 15 mm; aufweist

13. Hochelastisches Bespannungsmaterial nach einem der Ansprüche 1 bis 12, **dadurch gekennzeichnet, dass** das hochelastische Bespannungsmaterial umfassend hochelastische Materiallage/n und Textillage/n eine Schichtdicke von ≥ 0,15 mm und ≤ 10, 4 mm, vorzugsweise von ≥ 0,6 mm und ≤ 5,5 mm und bevorzugt von ≥ 1,2 mm und ≤ 3 mm aufweist.

14. Hochelastisches Bespannungsmaterial nach einem der Ansprüche 1 bis 13, **dadurch gekennzeichnet, dass** der Rahmen aus Verstärkungsmaterial eine Breite von ≥ 2 mm und ≤ 100 mm, vorzugsweise von ≥ 5 mm und ≤ 50 mm und bevorzugt von ≥ 15 mm und ≤ 25 mm aufweist.

15. Hochelastisches Bespannungsmaterial nach einem der Ansprüche 1 bis 14, **dadurch gekennzeichnet, dass** die Schicht aus Verstärkungsmaterial/ien, Textillage/n und hochelastische Materiallage/n wenigstens ein durchgehendes Loch, vorzugsweise mehrere Löcher aufweist, zwecks Befestigung des verstärkten hochelastischen Bespannungsmaterials in einem Kraftfahrzeug.

16. Hochelastisches Bespannungsmaterial nach einem der Ansprüche 1 bis 15, **dadurch gekennzeichnet, dass** das mit einem Verstärkungsmaterial verstärkte hochelastische Bespannungsmaterial mit einem aufblasbaren Formkörper in Kontakt steht.

17. Hochelastisches Bespannungsmaterial nach einem der Ansprüche 1 bis 16, **dadurch gekennzeichnet, dass** das mit einem Verstärkungsmaterial verstärkte hochelastische Bespannungsmaterial wenigstens eine äußere Oberfläche des aufgeblasenen Formkörpers ausmacht und die Ausdehnbewegung des aufblasbaren Körpers zumindest teilweise formschlüssig mitmacht.

18. Hochelastisches Bespannungsmaterials nach einem der Ansprüche 1 bis 17, **dadurch gekennzeichnet, dass** der aufblasbare Formkörper ein Sitz oder eine Sitzbank ist.

19. Verwendung des hochelastischen Bespannungsmaterial nach einem der Ansprüche 1 bis 18, in einem Luft-, Land- und/oder Wasser-Fortbewegungsmittel, vorzugsweise in einem Kraftfahrzeug, Flugzeug und/oder Schiff zwecks Ausbildung einer dehnbaren Oberfläche für einen aufblasbaren Formkörper, vorzugsweise eine Sitzvorrichtung.

## Claims

1. A highly elastic covering material on the basis of a coated foamed elastomer, especially as an outer surface that contacts an inflatable seat, with said highly elastic covering material comprising:
- at least one layer of highly elastic material made of a foamed elastomer;
- at least one stretchable textile layer that covers at least one top and/or bottom outer surface of the layer of highly elastic material;
with at least one outer surface of the textile-covered layer of highly elastic material being coated at least in part with a non-elastic reinforcement material, **characterized in that** the reinforcement material is chosen from the group comprising resins and/or thermosetting plastic materials.

2. A highly elastic covering material according to claim 1, **characterized in that** at least one layer of highly elastic material made of a foamed elastomer is covered in a sandwich-like manner by at least one upper and at least one bottom stretchable textile layer.

3. A highly elastic covering material according to one of the claims 1 or 2, **characterized in that** the reinforcement material is applied to the outer surface of at least one textile layer, preferably in the edge zone, more preferably circumferentially, especially preferably in form of a frame.

4. A highly elastic covering material according to one of the claims 1 to 3, **characterized in that** the textile layer is stretchable in the X and/or Y direction, preferably in a multi-axial way, by at least ≥ 50% and ≤ 700%, preferably by ≥ 100% and ≤ 500%, more preferably by ≥ 150% and ≤ 250%.

5. A highly elastic covering material according to one of the claims 1 to 4, **characterized in that** the textile layer comprises an outer structured surface, with the structured surface preferably having a woven structure, mesh structure and/or pore structure.

6. A highly elastic covering material according to one of the claims 1 to 5, **characterized in that** the textile layer is a fabric, preferably an elastic fabric, more preferably a stretchable woven fabric, especially preferably on the basis of a synthetic fiber, with the synthetic fiber being based most preferably on polyamide.

7. A highly elastic covering material according to one of the claims 1 to 6, **characterized in that** the foamed elastomer is based at least on a material chosen from the group comprising natural and/or synthetic elastomers, preferably latex foam, India rubber, chloroprene rubber, polychloroprene, block polymers and/or graft polymers.

8. A highly elastic covering material according to one of the claims 1 to 7, **characterized in that** the reinforcement material is chosen from the group comprising resins and/or thermosetting plastic materials, with the resin being based on epoxy-vinyl ester and/or epoxy polyester and the thermosetting plastic material being based on a melamine resin, phenolic resin and/or polyurethane resin.

9. A highly elastic covering material according to one of the claims 1 to 8, **characterized in that** the reinforcement material is connected with the textile layer chemically and/or physically.

10. A highly elastic covering material according to one of the claims 1 to 9, **characterized in that** the reinforcement material is applied in several layers of laminate arranged above one another, with preferably at least one, more preferably several, layers of laminate being reinforced additionally with a fiber material, preferably chosen from the group of glass fibers, carbon fibers, polymer fibers, aramides and/or ceramic fibers.

11. A highly elastic covering material according to one of the claims 1 to 10, **characterized in that** the frame produced from the reinforcement material is dimensionally stable and self-supporting.

12. A highly elastic covering material according to one of the claims 1 to 11, **characterized in that**
- the highly elastic layer of material has a layer thickness of ≥ 0.1 mm and ≤ 10 mm, preferably ≥ 0.5 mm and ≤ 5 mm, and more preferably ≥ 1.0 mm and ≤ 2.5 mm, and/or
- the textile layer has a layer thickness of ≥ 0.05 mm and ≤ 1 mm, preferably ≥ 0.07 mm and ≤ 0.5 mm, and more preferably ≥ 0.1 mm and ≤ 0.2 mm, and/or
- the reinforcement layer has a layer thickness of ≥ 3 mm and ≤ 25 mm, preferably ≥ 5 mm and ≤ 20 mm, and more preferably ≥ 8 mm and ≤ 15 mm.

13. A highly elastic covering material according to one of the claims 1 to 12, **characterized in that** the highly elastic covering material which comprises highly elastic layer(s) of material and layer(s) of textile has a layer thickness of ≥ 0.15 mm and ≤ 10.4 mm, preferably ≥ 0.6 mm and ≤ 5.5 mm, and more preferably ≥ 1.2 mm and ≤ 3 mm.

14. A highly elastic covering material according to one of the claims 1 to 13, **characterized in that** the frame made of reinforcement material has a width of ≥ 2 mm and ≤ 100 mm, preferably ≥ 5 mm and ≤ 50 mm, and more preferably ≥ 15 mm and ≤ 25 mm.

15. A highly elastic covering material according to one of the claims 1 to 14, **characterized in that** the layer made of reinforcement material(s), textile layer(s), and layer(s) of highly elastic material comprise at least one continuous hole, preferably several holes, for the purpose of fastening the reinforced highly elastic covering material in a motor vehicle.

16. A highly elastic covering material according to one of the claims 1 to 15, **characterized in that** the highly elastic covering material which is reinforced with a reinforcement material is in contact with an inflatable shaped body.

17. A highly elastic covering material according to one of the claims 1 to 16, **characterized in that** the highly elastic covering material which is reinforced with a reinforcement material represents at least one outer surface of the inflated shaped body and cooperates at least partly in an interlocking manner with the expansion movement of the inflatable body.

18. A highly elastic covering material according to one of the claims 1 to 17, **characterized in that** the inflatable shaped body is a seat or a bench.

19. The use of the highly elastic covering material according to one of the claims 1 to 18 in a means of transport in the air, on land and/or on the water, preferably in a motor vehicle, aircraft and/or ship for the purpose of forming an extensible surface for an inflatable shaped body, preferably a seat apparatus.

## Revendications

1. Matériau d'habillage tendu à forte élasticité à base de mousse d'élastomère doublée, en particulier sous la forme d'une surface extérieure venant en contact avec un siège gonflable, lequel matériau d'habillage tendu à forte élasticité présente :
- au moins une couche de matériau à forte élasticité faite d'une mousse d'élastomère,
- au moins une couche textile extensible doublant au moins une surface extérieure supérieure et/ou inférieure de la couche de matériau à forte élasticité,
dans lequel au moins une surface extérieure de la couche de matériau à forte élasticité à doublure textile est au moins partiellement enduite d'un matériau de renfort,
**caractérisé en ce que** le matériau de renfort est choisi dans un groupe comprenant des résines et/ou des matières plastiques thermodurcies.

2. Matériau d'habillage tendu à forte élasticité selon la revendication 1, **caractérisé en ce qu'**au moins une couche de matériau à forte élasticité faite d'une mousse d'élastomère est doublée en sandwich par au moins une couche de textile extensible supérieure et au moins une autre inférieure.

3. Matériau d'habillage tendu à forte élasticité selon l'une des revendications 1 ou 2, **caractérisé en ce que** le matériau de renfort est appliqué sur la surface extérieure d'au moins une couche de textile, de préférence dans la région du bord, de préférence de façon continue et en particulier sous la forme d'un cadre.

4. Matériau d'habillage tendu à forte élasticité selon l'une des revendications 1 à 3, **caractérisé en ce que** la couche textile est extensible dans la direction X et/ou Y, de préférence de façon multiaxiale, d'au moins ≥ 50 % et ≤ 700 %, de préférence de ≥ 100 % et ≤ 500 % et en particulier de ≥ 150 % et ≤ 250 %.

5. Matériau d'habillage tendu à forte élasticité selon l'une des revendications 1 à 4, **caractérisé en ce que** la couche textile présente une surface extérieure structurée, la surface structurée présentant de préférence une structure tissée, une structure en filet et/ou une structure poreuse.

6. Matériau d'habillage tendu à forte élasticité selon l'une des revendications 1 à 5, **caractérisé en ce que** la couche textile est un tissu, de préférence un tissu élastique, de préférence un tissu tissé extensible, en particulier à base d'une fibre synthétique, laquelle fibre synthétique est de préférence à base de polyamide.

7. Matériau d'habillage tendu à forte élasticité selon l'une des revendications 1 à 6, **caractérisé en ce que** la mousse d'élastomère est à base d'au moins un matériau choisi parmi le groupe comprenant les élastomères naturels et/ou synthétiques, de préférence la mousse de latex, le caoutchouc, le caoutchouc chloroprène, le polychloroprène, les polymères blocs et/ou les polymères greffés.

8. Matériau d'habillage tendu à forte élasticité selon l'une des revendications 1 à 7, **caractérisé en ce que** le matériau de renfort est choisi parmi le groupe comprenant des résines et/ou des plastiques thermodurcis, la résine étant à base d'ester vinylique époxy et/ou de polyester époxy et le plastique thermodurci étant à base de résine mélamine, de résine phénolique et/ou de résine polyuréthane.

9. Matériau d'habillage tendu à forte élasticité selon l'une des revendications 1 à 8, **caractérisé en ce que** le matériau de renfort est lié chimiquement et/ou physiquement à la couche textile.

10. Matériau d'habillage tendu à forte élasticité selon l'une des revendications 1 à 9, **caractérisé en ce que** le matériau de renfort est appliqué en plusieurs couches stratifiées superposées, au moins une couche stratifiée, de préférence plusieurs étant en outre renforcées avec un matériau en fibres, de préférence choisi parmi le groupe des fibres de verre, fibres de carbone, fibres de polymères, aramides et/ou fibres de céramique.

11. Matériau d'habillage tendu à forte élasticité selon l'une des revendications 1 à 10, **caractérisé en ce que** le cadre produit à partir du matériau de renfort a une forme stable et est en saillie.

12. Matériau d'habillage tendu à forte élasticité selon l'une des revendications 1 à 11, **caractérisé en ce que**
- la couche de matériau à forte élasticité a une épaisseur de couche de ≥ 0,1 mm et ≤ 10 mm, de préférence de ≥ 0,5 mm et ≤ 5 mm et en particulier de ≥ 1,0 mm et ≤ 2,5 mm ; et/ou
- la couche textile a une épaisseur de couche de ≥ 0,05 mm et ≤ 1 mm, de préférence de ≥ 0,07 mm et ≤ 0,5 mm et en particulier de ≥ 0,1 mm et ≤ 0,2 mm ; et/ou
- la couche de renfort a une épaisseur de couche de ≥ 3 mm et ≤ 25 mm, de préférence de ≥ 5 mm et ≤ 20 mm et en particulier de ≥ 8 mm et ≤ 15 mm.

13. Matériau d'habillage tendu à forte élasticité selon l'une des revendications 1 à 12, **caractérisé en ce que** le matériau d'habillage tendu à forte élasticité comprenant une ou plusieurs couches de matériau à forte élasticité et couches textiles a une épaisseur de couche de ≥ 0,15 mm et ≤ 10,4 mm, de préférence de ≥ 0,6 mm et ≤ 5,5 mm et en particulier de ≥ 1,2 mm et ≤ 3 mm.

14. Matériau d'habillage tendu à forte élasticité selon l'une des revendications 1 à 13, **caractérisé en ce que** le cadre en matériau de renfort a une largeur de ≥ 2 mm et ≤ 100 mm, de préférence de ≥ 5 mm et ≤ 50 mm et en particulier de ≥ 15 mm et ≤ 25 mm.

15. Matériau d'habillage tendu à forte élasticité selon l'une des revendications 1 à 14, **caractérisé en ce que** la couche de matériau(x) de renfort, de couche(s) textile(s) et de couche(s) de matériau à forte élasticité présente au moins un trou traversant, de préférence plusieurs trous, aux fins de fixation du matériau d'habillage tendu à forte élasticité renforcé dans un véhicule à moteur.

16. Matériau d'habillage tendu à forte élasticité selon l'une des revendications 1 à 15, **caractérisé en ce que** le matériau d'habillage tendu à forte élasticité renforcé avec un matériau de renfort est en contact avec un élément mis en forme gonflable.

17. Matériau d'habillage tendu à forte élasticité selon l'une des revendications 1 à 16, **caractérisé en ce que** le matériau d'habillage tendu à forte élasticité renforcé avec un matériau de renfort forme au moins une surface extérieure de l'élément mis en forme gonflable et accompagne au moins partiellement en correspondance de forme le mouvement d'expansion de l'élément gonflable.

18. Matériau d'habillage tendu à forte élasticité selon l'une des revendications 1 à 17, **caractérisé en ce que** l'élément mis en forme gonflable est un siège ou une banquette.

19. Utilisation du matériau d'habillage tendu à forte élasticité selon l'une des revendications 1 à 18 dans un moyen de locomotion aérien, terrestre et/ou aquatique, de préférence dans un véhicule à moteur, un avion et/ou un bateau, aux fins de former une surface extensible pour un élément mis en forme gonflable, de préférence une disposition de siège.
